# EUROPEAN PATENT APPLICATION

(11) **EP 2 474 497 A1**
(43) Date of publication of application: **11.07.2012**
(21) Application number: 09848973.5
(22) Date of filing: 03.09.2009
(51) Int. Cl.: B66B 3/00, B66B 1/14

(54) **CONTROL DEVICE FOR ELEVATOR**

(71) Applicant: Mitsubishi Electric Corporation, Tokyo 100-8310 (JP)
(72) Inventor: KURODA, Shinichi, Tokyo 100-8310 (JP)
(74) Representative: HOFFMANN EITLE
(86) International application number: PCT/JP2009/065395
(87) International publication number: WO 2011/027442

(57) **Abstract**

There is provided an elevator control device in which the number of kinds of sound signals that must be pre-registered is enough to be small, and the time and effort required for pre-registration work can be reduced. For this purpose, the elevator control device making call registration by means of voice recognition by using a microphone outputting the user's voice as a sound signal includes an indicator control means that causes an image which specifies one of objects selectable as a call registration object to be displayed on an indicator for displaying the image; a storage means which stores, in advance, the sound signal of a predetermined voice, which is used for designating the call registration object, as a registered sound signal; and a voice recognizing means that compares the sound signal delivered from the microphone with the registered sound signal, and delivers a control signal if these sound signals coincide with each other. The indicator control means is configured so as to output registration information, in which the object specified by the image displayed on the indicator is the call registration object, when receiving the control signal sent from the voice recognizing means.

## Description

### Technical Field

The present invention relates to an elevator control device.

### Background Art

As the conventional elevator control device, there has been known an elevator control device that is configured so that considering the convenience, for example, in the case where an elevator user holds luggage in both hands and therefore has difficulty in performing button operation, a microphone is provided in advance in a hall or a car of elevator, and the elevator user can make call registration for up direction, down direction, and destination floor by means of voice recognition.
As the elevator control device of this type, there has been known an elevator control device that includes a microphone provided in the elevator hall, a person detecting means for detecting whether or not an elevator user stands in front of the microphone, and a voice recognizing means that compares the sound signal inputted to the microphone with a pre-registered voice only when a person detection signal sent from the person detecting means is present, and generates a call registration signal when the sound signal coincides with the registered voice, whereby a reduction in voice recognition rate caused by noise is prevented, and erroneous call registration is reduced to improve the operation efficiency (for example, refer to Patent Literature 1).
There has also been known an elevator control device that is configured so that a similar call registering device is provided in the elevator car to make call registration for car destination floor by means of voice recognition.

### Citation List

### Patent Literature

Patent Literature 1: Japanese Patent No. 2557939

### Summary of Invention

### Technical Problem

Unfortunately, the conventional elevator control devices including the one described in Patent Literature 1 are premised on an assumption that the user has to voice the name of a button that the user wants to register (up/down in the hall, floor name (1st floor, 2nd floor, etc.) in the car), and this voice is recognized.
Therefore, in the above-described technique, it is necessary to register, in advance, the sound signals representing all of the names of floors at which the elevator concerned stops and the travel directions, which presents a problem that this pre-registration work is troublesome and requires much time and effort.

That is, in the case where the number of floors at which the elevator concerned stops are totally twelve, as the sound signals representing the floor names, it is necessary to pre-register many sound signals: for example, in addition to the sound signals of "ikkai (1st floor)", "nikai (2nd floor), and so forth, sound signals in which "kai (floor)" is omitted of "ich (1)", "ni (2)", and so forth, and further in the case where a plurality of pronunciations are present for the same floor name, a plurality of kinds of sound signals representing the same floor name (for example, "jikkai" and "jyukkai" both representing the 10th floor).

Also, in the conventional elevator control device, the sound signal inputted to the microphone is compared with the pre-registered sound signal, and when the inputted sound signal coincides with the registered sound signal, the call corresponding to the coincident sound signal is registered. Therefore, there arises a problem that, as the kinds of the pre-registered sound signals increase, the voice given by the user is recognized erroneously as a voice different from the voice intended by the user, so that the possibility that an erroneous call is registered in the call registering device becomes high.

The present invention has been made to solve the above-described problems, and a first object thereof is to provide an elevator control device in which the number of kinds of sound signals that must be pre-registered is enough to be small, and the time and effort required for pre-registration work can be reduced.
Also, a second object of the present invention is to provide an elevator control device in which the kinds of registered voices to be collated in voice recognition can be restricted, and the misrecognition rate of voice recognition can be reduced.

### Means for Solving the Problems

An elevator control device according to the present invention, which makes call registration by means of voice recognition by using a microphone which receives the input of a voice given by an elevator user and outputs the voice as a sound signal, comprises an indicator for displaying an image; an indicator control means which controls the display content of the indicator, and causes an image which specifies one of objects selectable as a call registration object to be displayed on the indicator; a storage means which stores, in advance, the sound signal of a predetermined voice, which is used for designating the call registration object, as a registered sound signal; and a voice recognizing means which compares the sound signal outputted from the microphone with the registered sound signal acquired from the storage means, and sends a control signal to the indicator control means if these sound signals coincide with each other, **characterized in that** when receiving the control signal sent from the voice recognizing means, the indicator control means sends registration information, in which the object specified by the image displayed on the indicator at the time when the control signal is received is the call registration object, to an elevator control device body making call registration.

### Advantageous Effects of Invention

The elevator control device in accordance with the present invention achieves an effect that the number of kinds of sound signals that must be pre-registered is enough to be small, and the time and effort required for pre-registration work can be reduced.
Also, the elevator control device achieves an effect that the kinds of registered voices to be collated in voice recognition can be restricted, and the misrecognition rate of voice recognition can be reduced.

### Brief Description of the Drawings

Figure 1 is a block diagram showing a general configuration of an elevator control device related to a first embodiment of the present invention.
Figure 2 is a flowchart showing the operation of the elevator control device related to a first embodiment of the present invention.
Figure 3 is views showing display examples of an indicator related to a first embodiment of the present invention.
Figure 4 is a block diagram showing a general configuration of an elevator control device related to a second embodiment of the present invention.

### Description of Embodiments

The present invention will now be described with reference to the accompanying drawings. In all the drawings, the same reference signs are applied to the same or equivalent parts, and the duplicated explanation thereof is simplified or omitted as appropriate.

### First embodiment

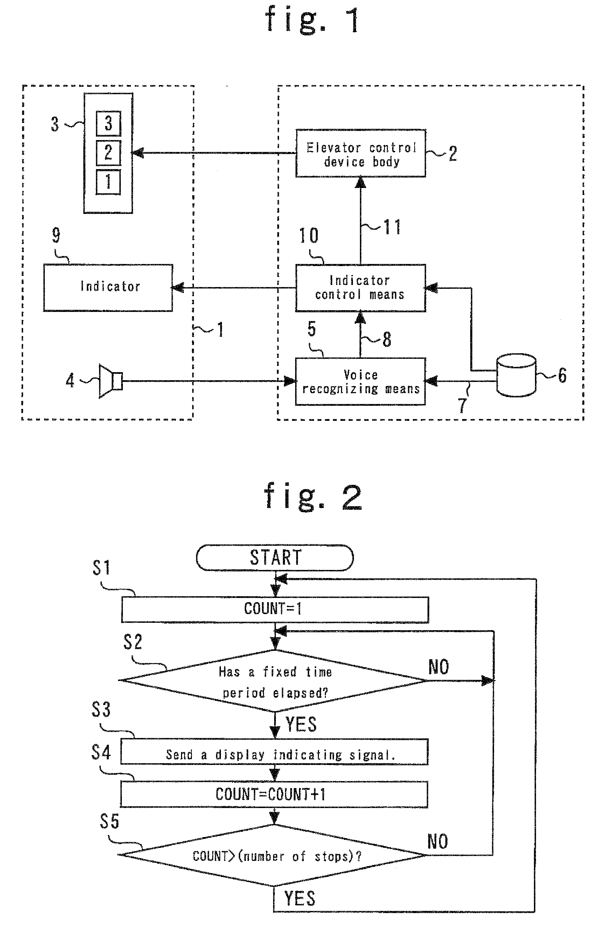

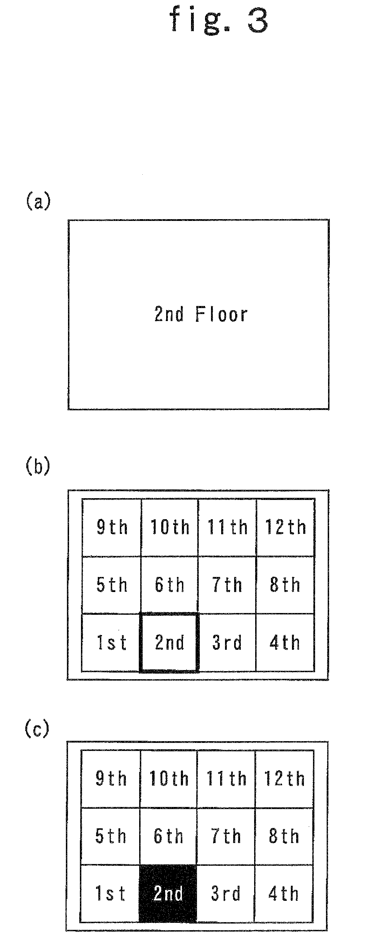

Figures 1 to 3 relate to a first embodiment of the present invention. Figure 1 is a block diagram showing a general configuration of an elevator control device, Figure 2 is a flowchart showing the operation of the elevator control device, and Figure 3 is views showing display examples of an indicator.
In Figure 1, reference sign 1 denotes a car elevatably disposed in a shaft, not shown, of an elevator. All of the operations of that elevator, including up and down movement of the car 1, are controlled by an elevator control device body 2.

In the car 1, there are provided destination floor registering buttons 3 so as to correspond to destination floors, the destination floor registering buttons 3 being used to register the car destination floor call by means of the operation of the elevator user, and the destination floor being a floor to which an elevator user wants to go. When the user operates the destination floor registering button 3, the operation state is transmitted to the elevator control device body 2. Then, according to the operation state of the destination floor registering button 3, call registration is made by the elevator control device body 2. Also, the elevator control device body 2 carries out lighting control of a button lamp of the destination floor registering button 3, and the like control, according to the operation state of the destination floor registering button 3.

In the car 1, there is provided a microphone 4 that receives the input of a voice given by the user, and converts the voice to an electric signal by using an analog/digital (A/D) converter incorporated therein and outputs the electric signal. The voice information given by the user, which is inputted via the microphone 4, is voice-recognized by a voice recognizing means 5.

In a storage means 6, the electric signals representing predetermined voices used for designating call registration objects are stored in advance as registered sound signals 7. The predetermined voices used for designating call registration objects are preferably simple voices such as "stop", "tomare", and "soko".
Also, the storage means 6 stores, in advance, the names of floors at which (the car 1 of) that elevator can stop.
Specifically, in the case where the building in which that elevator is installed is twelve-storied, and the car 1 can stop at twelve floors ranging from 1st floor to 12th floor, the 1st floor, the 2nd floor,...,the 12th floor are the names of floors at which the elevator can stop.

The voice recognizing means 5 acquires the registered sound signals 7 stored in advance from the storage means 6, compares the digital sound signal of voice information given by the user, which is inputted via the microphone 4, with the registered sound signal 7, and judges whether or not these sound signals coincide with each other.
If the digital sound signal sent from the microphone 4 coincides with the registered sound signal 7 sent from the storage means 6, the voice recognizing means 5 sends a control signal 8 to an indicator control means 10 assuming that the user has given the predetermined voice, which is used for designating the call registration object, to the microphone 4.

In the car 1, there is provided an indicator 9 consisting of an image displaying device such as a liquid crystal display, a plasma display, an LED, or a cathode-ray tube. The display operation of this indicator 9, that is, the content of displayed image is controlled by the indicator control means 10.
Based on the display indicating signal outputted from the indicator control means 10, the indicator 9 displays an image which specifies one of the objects that can be selected as a call registration object and which makes the user be able to select arbitrary one object, while changing the specified object one after another at a predetermined period (for example, every two seconds).

In the above-described example, in the case where the building in which the elevator concerned is installed is twelve-storied, and the car 1 can stop at twelve floors ranging from the 1st floor to the 12th floor, the indicator 9 first displays an image on which the 1st floor, which is the lowest floor, is specified as the call registration object, and next displays the 2nd floor as the call registration object after two seconds, which is one period of the above-described predetermined period, has elapsed.
After that, the indicator 9 displays images, on which the 3rd floor and the 4th floor are specified as the objects, one after another at the predetermined period. After displaying the image on which the 12th floor, which is the uppermost floor, as the object, the indicator 9 again displays the image on which the 1st floor, which is the lowest floor, is specified as the object, and thereafter repeats the circular displays at the predetermined period.
At this time, as the floor name displayed on the indicator 9 as a call registration object, the floor name that has been stored in the storage means 6 in advance and acquired from the storage means by the indicator control means 10.

When the indicator control means 10 receives the control signal 8 outputted when the voice recognizing means 5 succeeds in voice recognition, that is, when it is confirmed that the user gives the predetermined voice used for designating the call registration object to the microphone 4, the indicator control means 10 sends registration information 11, in which the object specified by the image displayed on the indicator 9 at this receipt time point is a call registration object, to the elevator control device body 2.
The elevator control device body 2 makes call registration in which the object specified by this received registration information 11 is a call registration object, and lights the button lamp of the destination floor registering button 3 corresponding to that call registration object.

The flowchart of Figure 2 shows the control operation of the display operation of the indicator using the indicator control means in accordance with this embodiment.
First, in step S1, the indicator control means 10 initializes a counter variable COUNT by substituting 1 in the counter variable COUNT.

In next step S2, the indicator control means 10 judges whether or not a fixed time period (for example, two seconds), which is one period of the predetermined period, has elapsed after the previous display indicating signal had been delivered. In this step, if it is judged that the fixed time period has not elapsed after the previous display indicating signal had been delivered, the control waits by repeating this step S2 until the fixed time period has elapsed after the previous display indicating signal had been delivered, and if it is judged that the fixed time period has elapsed after the previous display indicating signal had been delivered, the control proceeds to step S3.

In step S3, the indicator control means 10 sends a display indicating signal to the indicator 9 so that an image, on which the floor name corresponding to the value of the present counter variable COUNT is specified as the call registration object, is displayed. Also, simultaneously with the delivery of display indicating signal, the indicator control means 10 starts the measurement of elapsed time from the time when the display indicating signal is delivered.

As for the value of counter variable COUNT and the floor name, to the COUNT value of "1", the floor name of the lowest floor of the floors at which (the car 1 of) that elevator can stop is assigned, and to the COUNT value of "2", the floor name of a floor that is one higher than the lowest floor of the floors at which that elevator can stop is assigned. Thus, as the COUNT value increases by one, a floor name that is one higher is assigned. To the COUNT value corresponding to the number of floors at which that elevator can stop (hereinafter, referred to as "the number of stops" of that elevator), the floor name of the uppermost floor of the floors at which that elevator can stop is assigned.

Specifically, in the above-described example, in the case where the building in which the elevator concerned is installed is twelve-storied, and the car 1 can stop at twelve floors ranging from the 1st floor to the 12th floor, to the COUNT value of "1", the floor name of "1st floor", which is the lowest floor, corresponds, and to the COUNT value of "2", the floor name of "2nd floor", which is one higher than the lowest floor, corresponds. To the COUNT value of the number of stops, the floor name of "12th floor", which is the uppermost floor, corresponds.

In the successive step S4, the indicator control means 10 increases the value of the counter variable COUNT by one, that is, substitutes a value obtained by adding 1 to the present COUNT value as a new COUNT value.
In the next step S5, the indicator control means 10 judges whether or not the value of counter variable COUNT exceeds the number of stops. In step S5, if it is judged that the COUNT value exceeds the number of stops, the control returns to step S1 where the counter variable COUNT is initialized, and the operation flow explained above is repeated.

On the other hand, in step S5, if it is judged that the COUNT value is not larger than the number of stops, the control returns to step S2, and the operation flow is repeated at the COUNT value increased by one in step S4 without the initialization of the counter variable COUNT.
Thus, the value of the counter variable COUNT is kept not smaller than 1 and not larger than the number of stops. The indicator control means 10 can know, by referring to the COUNT value, what is the floor name specified by the image displayed at present on the indicator 9.

Figure 3 shows examples of images on which one of the selectable objects is specified as the call registration object displayed on indicator 9, and arbitrary one object can be selected.
Figure 3(a) shows the case where the floor names specified as the call registration objects are displayed one after another on the indicator 9 periodically and circularly.

Figure 3(b) shows the case where all of the floor names selectable as the call registration objects are displayed in a tile form on the indicator 9. The thickness of the frame line of an area displaying one floor name is changed from the thicknesses of the frame lines of areas displaying other floor names (for example, in this case, the thickness of the frame line of one floor name is made larger than the thicknesses of the frame lines of other floor names), whereby certain one floor name is specified. The objects specified by the thickness of frame line different from others in this manner are displayed periodically and circularly.

Figure 3(c) shows the case where all of the floor names selectable as the call registration objects are displayed in a tile form on the indicator 9. The letter color and the background color in an area displaying one floor name are reversed, whereby certain one floor name is specified. The objects specified by reversing the letter color and the background color in this manner are displayed periodically and circularly.
The above-explained Figures 3(a), 3(b) and 3(c) merely show examples, and any image can be used if the image is an image on which one of the objects selectable as the call registration object is specified, and arbitrary one object can be selected.

The elevator control device configured as described above operates as described below.
First, the indicator control means 10 specifies one of the objects (floor names) selectable as the call registration object for the indicator 9 by using the counter variable COUNT by following the above-described operation flow shown in Figure 2, and delivers a display indicating signal so that the images on which arbitrary one object can be selected are displayed circularly by changing the specified object (floor name) one after another at the predetermined period.
On receipt of this display indicating signal, the indicator 9 specifies one of the objects (floor names) selectable as the call registration object as in the examples shown in the Figure 3, and displays the images, on which arbitrary one object can be selected, circularly by changing the object (floor name) one after another at the predetermined period.

While looking at the images displayed on the indicator 9, the user himself/herself of that elevator gives the predetermined voice used for designating the call registration object when the floor name desired as the car destination registration object (destination floor) is specified on the image of the indicator 9.
Then, the voice recognizing means 5 compares the sound signal given by the user, which is inputted via the microphone 4, with the registered sound signal 7 of the predetermined voice acquired from the storage means 6. If these sound signals coincide with each other, the control signal 8 is sent to the indicator control means 10.

The indicator control means 10 having received this control signal 8 refers to the present value of the counter variable COUNT, acquires the floor name corresponding to this value of COUNT from the storage means 6, and outputs this floor name to the elevator control device body 2 as the registration information 11.
The elevator control device body 2 having received this registration information 11 makes car destination floor call registration in which the floor name specified by that registration information 11 is the destination floor, and lights the button lamp of the destination floor registering button 3 corresponding to the destination floor of that call registration.

The elevator control device configured as described above is characterized by an elevator control device making call registration by means of voice recognition by using a microphone that receives the input of a voice given by an elevator user and outputs the voice as a sound signal, including an indicator for displaying an image; an indicator control means that controls the display content of the indicator, and causes an image on which one of objects selectable as a call registration object to be displayed on the indicator; a storage means for storing, in advance, the sound signal of a predetermined voice, which is used for designating the call registration object, as a registered sound signal; and a voice recognizing means that compares the sound signal delivered from the microphone with the registered sound signal acquired from the storage means, and sends a control signal to the indicator control means if these sound signals coincide with each other, in which when receiving the control signal sent from the voice recognizing means, the indicator control means sends registration information, in which the object specified by the image displayed on the indicator at the time when the control signal is received is the call registration object, to an elevator control device body making call registration.

Also, the indicator control means controls the display content of the indicator so that the one object specified by the image displayed on the indicator changes one after another at a predetermined period.
The microphone and the indicator are provided in a car of the elevator; the call registration object is a floor at which the elevator can stop; and the indicator control means carries out control so that the image on which one floor of the floors at which the elevator can stop is specified is displayed on the indicator, and sends the registration information, in which the floor specified by the image displayed on the indicator at the time when the control signal sent from the voice recognizing means is received is the call registration object, to the elevator control device body.

Therefore, in the elevator control device making car destination floor call registration by means of voice recognition in the car, the sound signal that must be pre-registered has only to be the predetermined voice used for designating the call registration object, which is a simple voice such as "stop". Therefore, the number of kinds of sound signals that must be pre-registered is enough to be small, and the time and effort required for pre-registration work can be reduced.
Thereupon, the kinds of registered voices to be collated in voice recognition can be restricted, and the misrecognition rate of voice recognition can be reduced.

### Second embodiment

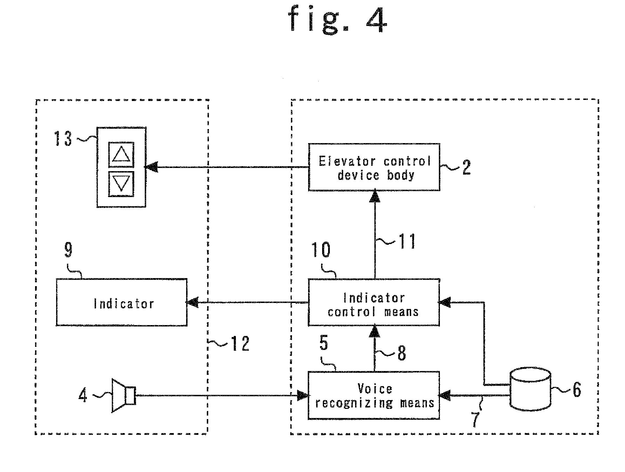

Figure 4 relates to a second embodiment of the present invention, being a block diagram showing a general configuration of an elevator control device.
In the above-described first embodiment, the elevator control device in accordance with the present invention is applied to the call registering device that is provided in the elevator car to make car destination floor call registration in which a certain floor is a destination floor. On the other hand, in the second embodiment explained hereunder, the elevator control device in accordance with the present invention is applied to a call registering device that is provided in the elevator hall to make hall call registration of the up direction or the down direction.

In a hall 12 provided on each floor at which the car 1 of the elevator concerned stops, hall call registering buttons 13 for registering the call of desired direction of the up direction and the down direction by the operation of the user of that elevator are provided so as to correspond to the up direction and the down direction. When the user operates the hall call registering button 13, the operation state is transmitted to the elevator control device body 2. Then, according to the operation state of the hall call registering button 13, call registration is made by the elevator control device body 2. Also, the elevator control device body 2 carries out lighting control of a button lamp of the hall call registering button 13, and the like control, according to the operation state of the hall call registering button 13.

Also, in the hall 12, there are provided the microphone 4 and the indicator 9 that are similar to those provided in the car 1 in the first embodiment.
For the indicator 9, as in the first embodiment, the display content is controlled by the display indicating signal sent from the indicator control means 10. However, the image on which one of the objects selectable as the call registration object is specified, and arbitrary one object can be selected is different between the first embodiment and the second embodiment in that the call registration object is the floor name in the first embodiment, and on the other hand, the call registration object is the call direction in the second embodiment.

Specifically, first, an image on which the up direction is specified as the call registration object is displayed, and next, after one period of the predetermined period has elapsed, an image on which the down direction is specified as the call registration object is displayed. After that, the image on which the up direction is specified and the image on which the down direction is specified are displayed alternately at the predetermined period.
At this time, as the image representing the travel direction displayed on the indicator 9 as the call registration object, the image stored in advance in the storage means 6, which is acquired from the storage means 6 by the indicator control means 10, is used. In the second embodiment, it is conceivable that as the image representing the up direction, a letter "U", an upwardly directed arrow, or the like is used, and as the image representing the down direction, a letter "D", a downwardly directed arrow, or the like is used.

The control operation of the display operation of the indicator using the indicator control means in accordance with the second embodiment is similar to the above-described control operation in the first embodiment as shown in Figure 2.
In the second embodiment, concerning the value of the counter variable COUNT and the call direction, the up direction is correspondingly assigned to the COUNT value of "1", and the down direction is correspondingly assigned to the COUNT value of "2". The number of stops has only to be "2".

Also, as the examples of images on which one of the objects selectable as the call registration object displayed on the indicator 9 is specified, and arbitrary one object can be selected, the image examples that are similar to those in the first embodiment are cited as shown in Figure 3.
In the second embodiment, in place of the floor name in the case where the elevator control device is installed in the car 1 in the first embodiment, the up direction and the down direction are displayed as the call direction in the second embodiment. At this time, as described above, it is conceivable that as the image representing the up direction, a letter "U", an upwardly directed arrow, or the like is used, and as the image representing the down direction, a letter "D", a downwardly directed arrow, or the like is used.
Other configurations are the same as those in the first embodiment, so that the detailed explanation thereof is omitted.

The elevator control device configured as described above operates as described below.
First, the indicator control means 10 specifies one of the objects (travel directions) selectable as the call registration object for the indicator 9 by using the counter variable COUNT by following the above-described operation flow shown in Figure 2, and delivers a display indicating signal so that the images on which arbitrary one object can be selected are displayed circularly by changing the specified object (travel direction) one after another at the predetermined period.

On receipt of this display indicating signal, the indicator 9 specifies one of the objects (travel directions) selectable as the call registration object, and displays the images, on which arbitrary one object can be selected, circularly by changing the object (travel direction) one after another at the predetermined period.
Specifically, in this embodiment, the indicator 9 displays the image on which the up direction is specified as the call registration object and the image on which the down direction is specified as the call registration object alternately at the predetermined period.

While looking at the images displayed on the indicator 9, the user himself/herself of that elevator gives the predetermined voice used for designating the call registration object when the travel direction desired as the hall call registration object is specified in the image of the indicator 9.
Then, the voice recognizing means 5 compares the sound signal given by the user, which is inputted via the microphone 4, with the registered sound signal 7 of the predetermined voice acquired from the storage means 6. If these sound signals coincide with each other, the control signal 8 is sent to the indicator control means 10.

The indicator control means 10 having received this control signal 8 refers to the present value of the counter variable COUNT, acquires the travel direction corresponding to this value of COUNT from the storage means 6, and outputs this travel direction to the elevator control device body 2 as the registration information 11.
The elevator control device body 2 having received this registration information 11 makes hall call registration in which the travel direction specified by that registration information 11 is the object, and lights the button lamp of the hall call registering button 13 corresponding to the travel direction of that call registration.

The elevator control device configured as described above is **characterized in that** the microphone and the indicator are provided in a hall of the elevator; the call registration object is the travel direction (the up direction and the down direction) of the elevator; and the indicator control means carries out control so that the image on which one travel direction (the up direction or the down direction) of the travel directions of the elevator is specified is displayed on the indicator, and sends the registration information, in which the travel direction specified by the image displayed on the indicator at the time when the control signal sent from the voice recognizing means is received is the call registration object, to the elevator control device body.
Therefore, the elevator control device making hall call registration by means of voice recognition in the hall can achieve the same effects as those of the first embodiment.

### Industrial Applicability

The present invention can be applied to an elevator control device making call registration by means of voice recognition by using a microphone.

### Description of Symbols

[0043]
- 1: car
- 2: elevator control device body
- 3: destination floor registering buttons
- 4: microphone
- 5: voice recognizing means
- 6: storage means
- 7: registered sound signals
- 8: control signal
- 9: indicator
- 10: indicator control means
- 11: registration information4
- 12: hall
- 13: hall call registering buttons

## Claims

1. An elevator control device making call registration by means of voice recognition by using a microphone which receives the input of a voice given by an elevator user and outputs the voice as a sound signal, comprising:
an indicator for displaying an image;
indicator control means which controls the display content of the indicator, and causes an image which specifies one of objects selectable as a call registration object to be displayed on the indicator;
storage means which stores, in advance, the sound signal of a predetermined voice, which is used for designating the call registration object, as a registered sound signal; and
voice recognizing means which compares the sound signal outputted from the microphone with the registered sound signal acquired from the storage means, and sends a control signal to the indicator control means if these sound signals coincide with each other, **characterized in that**
when receiving the control signal sent from the voice recognizing means, the indicator control means sends registration information, in which the object specified by the image displayed on the indicator at the time when the control signal is received is the call registration object, to an elevator control device body making call registration.

2. The elevator control device according to claim 1, **characterized in that** the indicator control means controls the display content of the indicator so that the one object specified by the image displayed on the indicator changes one after another at a predetermined period.

3. The elevator control device according to claim 1 or 2, **characterized in that**
the microphone and the indicator are provided in a car of the elevator;
the call registration object is a floor at which the elevator can stop; and
the indicator control means carries out control so that the image which specifies one floor of the floors at which the elevator can stop is displayed on the indicator, and sends the registration information, in which the floor specified by the image displayed on the indicator at the time when the control signal sent from the voice recognizing means is received is the call registration object, to the elevator control device body.

4. The elevator control device according to claim 1 or 2, **characterized in that**
the microphone and the indicator are provided in a hall of the elevator;
the call registration object is the travel direction of the elevator; and
the indicator control means carries out control so that the image which specifies one travel direction of the travel directions of the elevator is displayed on the indicator, and sends the registration information, in which the travel direction specified by the image displayed on the indicator at the time when the control signal sent from the voice recognizing means is received is the call registration object, to the elevator control device body.
